# EUROPEAN PATENT SPECIFICATION

(11) **EP 1 378 195 B1**
(45) Date of publication and mention of the grant of the patent: **28.09.2005**
(21) Application number: 02425444.3
(22) Date of filing: 05.07.2002
(51) Int. Cl.: A47J 45/07, A47J 45/10

(54) **Removable handle for pots**
Abnehmbarer Griff für Töpfe
Poignée amovible pour casseroles

(43) Date of publication of application: 07.01.2004
(73) Proprietor: Morando, Mauro, 20090 Cusago (Milano) (IT)
(72) Inventor: Morando, Mauro, 20090 Cusago (Milano) (IT)
(74) Representative: Ghioni, Carlo Raoul Maria

(56) References cited:
- FR-A- 1 361 405
- US-A- 3 232 657
- US-A- 3 272 547

## Description

The present invention relates to a removable handle for pots.

It is known that pots are essentially formed of a base and a side wall that together with the base confines a holding volume for the dishes to be cooked therein. Pots made of steel, aluminium, cast iron, and lined or not with a film of non-stick material are known.

A pot usually has one or two handles or handgrips suitably shaped to be easily grasped.

Metal handles are known that are welded or rivetted to the pot itself or even made as one body with the pot. Often the mentioned handles are provided with a cover of insulating plastic material to prevent the pot heat from making them too hot.

The main drawback of these types of pots resides in that it is difficult to put them away when they are not used. In fact, the handle bulkiness avoids a pot of a given diameter being fully inserted into a pot of bigger diameter, and also does not allow several pots to be stored close to each other on a shelf or in a drawer, of a kitchen cupboard for example.

To partly obviate these problems, pots have been conceived which are provided with removable handles having an engagement portion rigidly fastened to the pot itself, typically placed externally of the pot side wall on which the true handle is to be hooked.

This type of pots too is not free from the above described drawbacks, because at all events bulkiness of the engagement portion does not allow a pot to be inserted into another, if their diameters are only slightly different.

In addition, each production company has connecting pieces and handles of their own so that, actually, the handles of different production companies cannot be exchanged with each other.

Furthermore, to make pots of this type, the engagement portions are always required to be joined to the pot body, during the production process.

It is also known from document US-3-232-657 a gripping device for handling hot containers. The gripping device comprises a handle, terminating at its forward end in a lower jaw, and a lever having an upper jaw pivoted by a rivet on the handle. The rearward end of the lever has a latch surface which cooperates with a catch mounted on the handle and engageable on the lever.

Finally, document US-3-272-547, which is considered to represent the closest prior art, discloses a detachable handle adapted to be removably applied to a fry pan, casserole or like cooking vessels. The handle comprises an hand gripping portion, a fixed gripping jaw integral with the hand gripping portion, a movable gripping jaw, a stepped cam depending from the fixed jaw and lever means having a cam emgaging member adapted to ride on the stepped cam.

Under this situation the technical task underlying the present invention is to conceive a removable handle for pots capable of substantially obviating the mentioned drawbacks.

Mainly, it is an aim of the present invention to conceive a removable handle for pots that can be fully removed from the pot itself, to enable a pot to be completely inserted into another, even if it is of similar diameter.

It is a further aim of the present invention to conceive a removable handle for pots that can be mounted on every type of pot.

Within the scope of said technical task it is an important aim of the invention to conceive a removable handle allowing the production cost of the pots to be reduced.

Finally, it is an aim of the present invention to conceive a removable handle that can be easily and quickly installed on and dismantled from the pots.

The technical task mentioned and the aims specified are substantially achieved by a removable handle for pots having the features set out in one or more of the appended claims.

Description of a preferred but not exclusive embodiment of a removable handle for pots in accordance with the present invention is taken hereinafter by way of nonlimiting example, with reference to the accompanying drawings, in which:
- Fig. 1 is a perspective view of a pot provided with a handle in accordance with the present invention;
- Fig. 2 is an enlarged perspective view of the handle in Fig. 1;
- Fig. 2a is an enlarged perspective view of an alternative embodiment of the handle in Fig. 1;
- Fig. 3 is an enlarged side view in section of the handle associated with the pot in Fig. 1, in a first operating position;
- Fig. 4 shows the handle in Fig. 3 in a second operating position;
- Fig. 5 represents the handle in Fig. 4 in a third operating position; and
- Fig. 6 is a plan view of the handle in Figs. 2 and 2a.

With reference to the drawings, there is shown a pot provided with a base 2 and at least one side wall 3 extending transversely of the base 2 to confine together with the base 2 itself, a holding volume 4 for the dishes to be cooked. In the embodiment shown, the base 2 of pot 1 is of circular form and the side wall 3 takes the shape of a cylinder.

At the upper part thereof, the side wall 3 terminates with a rim 5 projecting radially away from the side wall 3, which however in embodiments not shown can merely terminate as a vertical extension of the side wall 3 itself.

Advantageously, a handle 6 is removably linked to the rim 5 of pot 1.

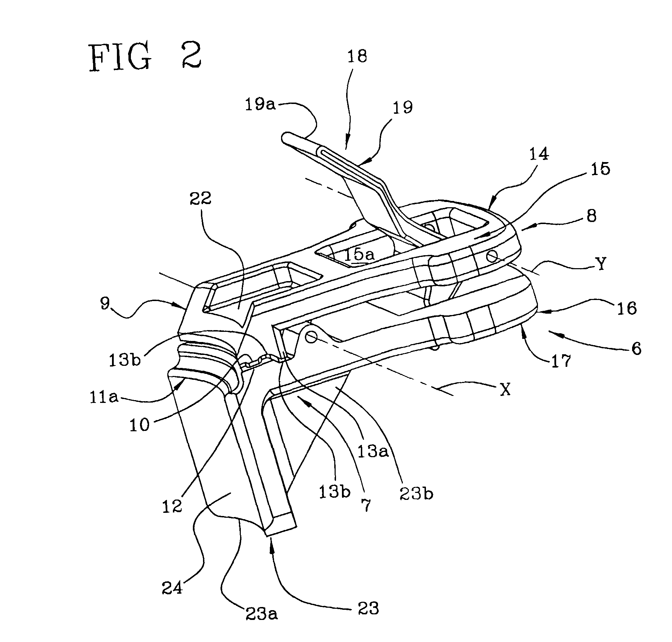

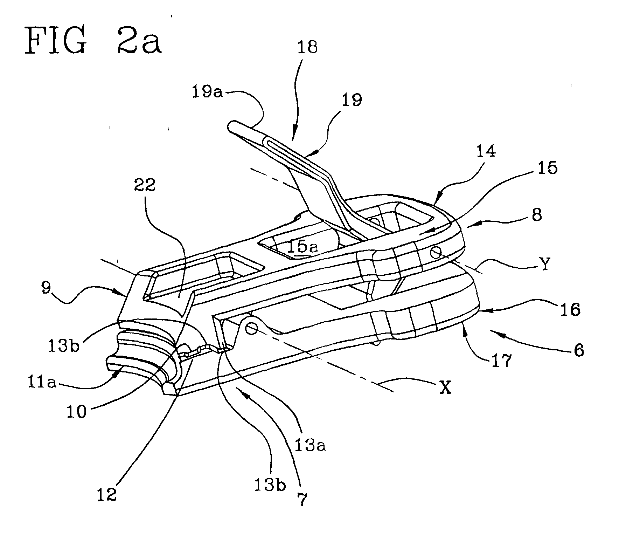

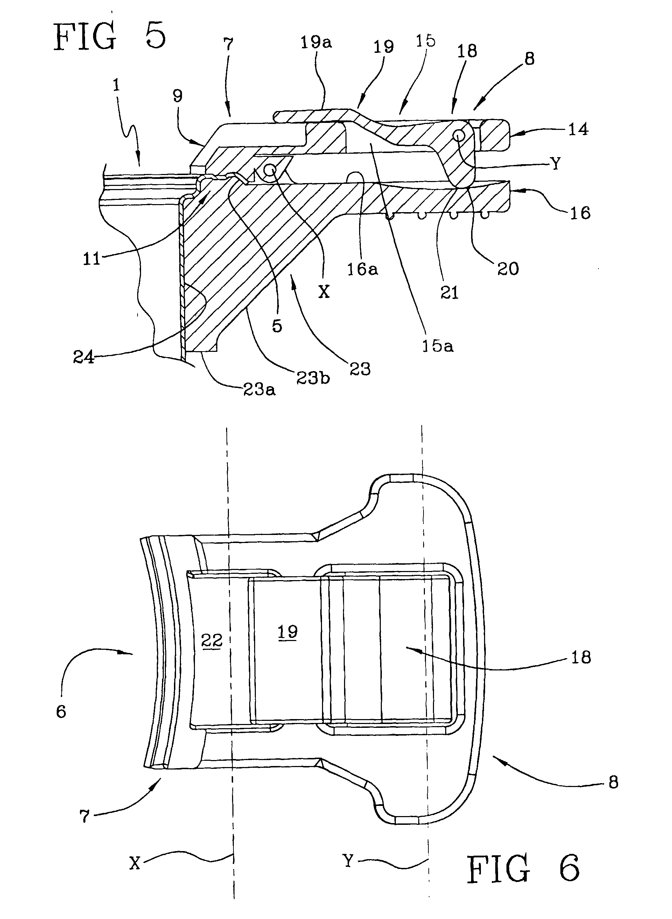

Handle 6 comprises (Figs. 2 and 2a) a hooking element 7 to be engaged with the rim 5 of pot 1 and a grip element 8 connected to the hooking element 7. According to the illustration in Fig. 6, handle 6 seen in plan view preferably has a tapering shape starting from the grip element 8 towards the hooking element 7.

In fact, the grip element 8 must be suitably shaped so that a user may safely grasp it.

More specifically, the hooking element 7 comprises a first jaw 9 carrying a first engagement surface 10 and a second jaw 11 carrying a second engagement surface 12 facing the first surface 10.

The first and second jaws 9, 11 are rotatably linked tc each other around a first hinging axis X, to rotate between a closed position and an open position.

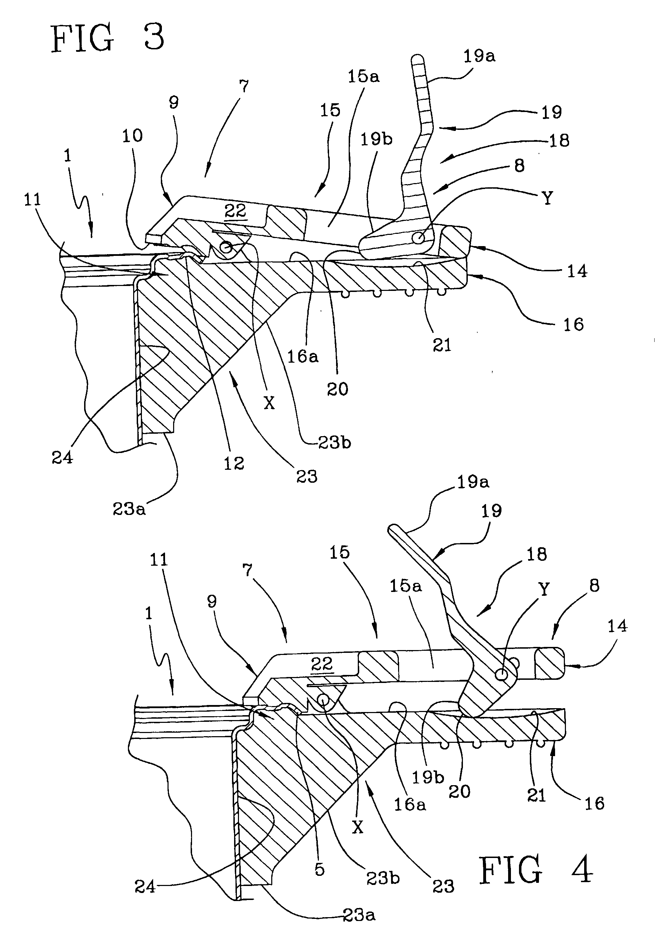

In particular, the first engagement surface 10 and second engagement surface 12 are movable between the open position (Fig. 3) at which the first engagement surface 10 is spaced apart from the second engagement surface 12, and the closed position (Fig. 5), at which the first engagement surface 10 is disposed close to the second engagement surface 12 to clamp the rim 5 of pot 1 between said first and second engagement surfaces.

Preferably, in addition, as clearly shown in Figs. 2, 2a and 3, the shape of the engagement surfaces 10, 12 matches that of the rim 5 of pot 1 to be clamped. In particular, the first and second engagement surfaces 10, 12 each have a projection 13a defining a respective recess 12b so as to precisely copy an undulation of rim 5.

Still more preferably, the projections and recesses 13a, 13b extend in the engagement surfaces 10, 12 following an arc of a circle of substantially the same radius as that of pot 1.

A first portion 14 of the grip element 8 is integral with the first jaw 9 and extends from a side opposite to the first engagement surface 10, with respect to the first hinging axis X. In the embodiment shown in the figures, the first portion 14 of the grip element 8 and the first jaw 9 constitute a first flattened body 15.

Likewise, a second grip portion 16 is integral with the second jaw 11 and extends from a sice opposite to the second engagement surface 12 with respect to the first hinging axis X.

The second portion 16 of the grip element 8 too and the second jaw 11 constitute a second flattened body 17 superposed on the first flattened body 15 and hinged on it around the first hinging axis X.

In an alternative embodiment not shown, the first and second portions 14 and 16 of the grip element 8 have a tapered shape to define an elongated handle to be associated with pots of reduced height or saucepans, for example.

In addition, handle 6 comprises locking means 18 to lock the hooking element 7 to the closed position.

The locking means 18 snows a lever system 19 operatively active between the first and second grip portions 14, 16. In particular, the lever system 19 is hinged on the first grip portion 14 around a second hinging axis Y and is disposed in a through opening 15a formed in the first flattened body 15.

The lever system 19 has a first lever 19a substantially extending over the first grip portion 14 and a second lever 19b rigidly and transversely connected to the first lever 19a at the second hinging axis Y which is parallel to the first hinging axis X and suitably spaced apart therefrom.

The second lever 19b of the lever system 19 extends towards the second grip portion 16 and has an active end 20 associable with the second grip portion 16 in a contact relationship therewith.

The maximum distance between the second hinging axis Y and the active end 20 of the second lever 19b is advantageously slightly greater than the maximum distance between the second hinging axis Y and the second grip portion 16, measured when the first 10 and second 12 engagement surfaces are in the closed and clamped position, more specifically when the rim 5 of pot 1 is sandwiched between the first 10 and second 12 engagement surfaces. In addition, the second grip portion 16 has a groove 21 into which the active end 20 of the second lever 19b engages when the first lever 19a is in abutment against the first flattened portion 15.

Preferably, as shown in Figs. 3, 4 and 5, groove 21 is connected to the flat surface 16a of the second grip portion 16 and the groove shape, typically in the form of an arc of a circle, determines distribution of the force to be applied to the first lever 19a depending on the position of the latter.

In this way the lever system 19 is movable between a first position, at which the first jaw 9 and second jaw 11 are free to mutually rotate with respect to the first hinging axis X, and a second position corresponding to locking of the grip element 7 to the closed position, at which the active portion 20 is housed in groove 21.

In moving from one position to the other, the lever system 19 runs through a position of unstable equilibrium shown in Fig. 4.

In fact, when handle 6 is wished to be mounted on pot 1, the pot rim 5 is to be inserted between the engagement surfaces 10, 12 of the hooking element 7 when the first and second jaws 9, 11 are open and free to rotate with respect to each other around the first hinging axis X (Fig. 3). The lever system 19 consequently is in the first position, with the first lever 19a of the lever system 19 lying transversely of the first flattened body 1b.

In this configuration the lever system 19 too is free to rotate about the respective second hinging axis Y.

After rim 5 has been positioned between jaws 9, 11, the lever system 19 is rotated towards the first flattened body 15 by acting on the first lever 19a.

Rotation of the first lever 19a of the lever system 19 causes simultaneous rotation of the second lever 19b getting in contact therewith and sliding on the second flattened element 17. The action of the second lever 19b on the second flattened element 17 causes opening of the first 14 and second 16 portions of the grip element 8 and clamping of jaws 9, 11 on rim 5.

The maximum force exerted by the second lever 19b of the lever system 19 is obtained when the first lever 19a of the lever system 19 is close to the first flattened element 15, but not yet in abutment against the latter and simultaneously the second lever 19b of the lever system 19 lies close to groove 11 (Fig. 4). In this situation the lever system 19 is in the unstable-equilibrium position. In fact, if the user terminates the thrust action on the first lever 19a of the lever system 19, said lever tends to come back causing reopening of jaws 9, 11; if, on the contrary, the user goes on in carrying out the thrust action, the first lever 19a of the lever system 19 abuts against the first flattened element 15 and the active portion 20 of the second lever 19b of the lever system 19 enters the groove 21 by snap-fitting, reaching the closed equilibrium position (Fig. 5) .

If handle 6 is wished to be removes, it is sufficient to lift the end of the first lever 19a of the lever system 19 to make the second lever 19b come out of the respective groove 21.

To facilitate lifting of the first lever 19a of the lever system 19, the first flattened element 15 is provided with a hollow space or notch 22 that, when the lever system 19 is disposed against the first flattened element 15, lies under the end of the first lever 19a and enables the user to introduce his/her fingers thereinto to pull the lever system 19 upwardly.

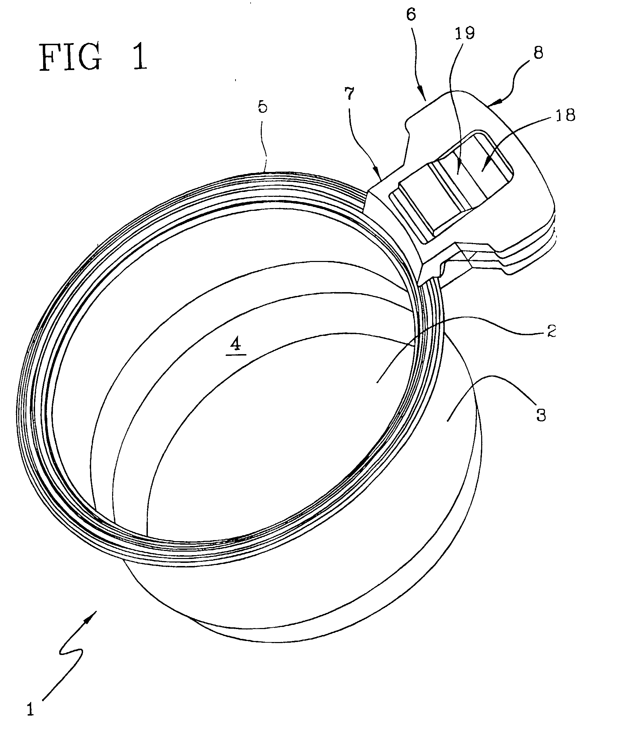

Preferably, as shown in Figs. 1, 2, 3, 4 and 5, handle 6 further comprises a tailpiece 23 extending away from the second jaw 11, on the opposite side with respect to the second engagement surface 12. In particular, the tailpiece 23 is made up of a main element 23a extending along a front edge 11a of the second jaw 11, running from said jaw in a perpendicular direction to the second engagement surface 12. The main element 23a of the tailpiece 23 that in the embodiment shown is in the form of a curved wall, defines a rest surface 24 substantially orthogonal to the second engagement surface 12 and continuously extending from the front edge 11a of the second jaw 11.

The rest surface 24, when the handle 6 is mounted on pot 1, bears against the side wall 3 of the pot 1 itself, to ensure a greater resistance to bending at the rim 5/jaw 9, 11 junction, in particular when pot 1 is provided with a single handle 6.

Advantageously the tailpiece 23 further comprises a reinforcing element 23b transversely joined to the main element 23a and the second jaw 11. In the embodiment shown in the accompanying drawings, the reinforcing element 23b takes the shape of a triangular handkerchief the two minor sides of which are connected to the main element 23a of the tailpiece 23 and the second flattened body 17 carrying the second jaw 11, respectively.

The invention achieves important advantages.

In fact, first of all, it should be noted that the removable handle for pots in accordance with the present invention enables a reduction in the volume taken up by said pots at the inside of cupboards or drawers when said pots are not in use.

In fact, the handle in accordance with the present invention can be fully removed from the pot and enables a pot to be inserted into another one, even when they are of similar diameters.

Furthermore, the handle in accordance with the present invention can be mounted on any type of pot available on the market. Consequently, a limited number of handles is required based on the number of pots that are normally simultaneously used.

In addition, the handle in accordance with the present invention ensures a reduction in the production cost of the pots, on which mounting of additional portions for engagement of the removable handles of the known art is no longer required.

It should be also recognized that a possible breaking of any part of a handle made in accordance with the present invention in any case ensures integrity of the pot on which it is mounted, due to the absence of handle portions integral with the pot itself; replacement of the broken handle enables availability of a perfectly integral product.

Finally, the removable handle in accordance with the present invention can be easily and quickly installed and dismantled from the pots on which it is mounted.

## Claims

1. A removable handle for pots, comprising:
- a hooking element (7) presenting a first engagement surface (10) and a second engagement surface (12) that are movable between an open position, at which the first engagement surface (10) is spaced apart from the second engagement surface (12), and a closed and clamped position at which the first engagement surface (10) is positioned close to the second engagement surface (12);
- a grip element (8) connected to the hooking element (7) and adapted to be grasped with one hand; said grip element (8) presenting a first hand grip portion (14) integral with the first engagement surface (10), to constitute a first body (15);
- locking means (18) comprising a lever system (19) movable from a first position towards a second position to close the first engagement surface (10) and the second engagement surface (12) towards the closed and clamped position;
**characterized in that** the grip element (8) presents a second hand grip portion (16) integral with the second engagement surface (12), to constitute a second body (17), the first body (15) being superposed on the second body (17); and **in that** the lever system (19) is operatively active between the first and second hand grip portions (14, 16), to space the first hand grip portion (14) apart from second hand grip portion (16) when the first engagement surface (10) and the second engagement surface (12) are closed towards the closed and clamped position.

2. A handle as claimed in claim 1, **characterized in that** the hooking element (7) comprises a first jaw (9) carrying the first engagement surface (10) and a second jaw (11) carrying the second engagement surface (12); said first and second jaws (9, 11) being rotatably linked to each other about a first hinging axis (X), to rotate between the closed position and open position.

3. A handle as claimed in claim 2, **characterized in that** it further comprises a tailpiece (23) extending away from the second jaw (11) on the opposite side with respect to the second engagement surface (12); said tailpiece (23) having a rest surface (24) which is substantially orthogonal to the second engagement surface (12) and extends from a front edge (11a) of said second jaw (11).

4. A handle as claimed in claim 2, **characterized in that** the first hand grip portion (14) is integral with the first jaw (9) and extends opposite to the first engagement surface (10) with respect to the first hinging axis (X); and **in that** the second hand grip portion (16) is integral with the second jaw (11) and extends opposite to the second engagement surface (12) with respect to the first hinging axis (X).

5. A handle as claimed in claim 4, **characterized in that** said lever system (19) is hinged on the first hand grip portion (14) around a second hinging axis (Y).

6. A handle as claimed in claim 5, **characterized in that** the second hinging axis (Y) is parallel to the first hinging axis (X).

7. A handle as claimed in claim 6, **characterized in that** the lever system (19) has:
- a first lever (19a) substantially extending over the first hand grip portion (14);
- a second lever (19b) rigidly and transversely connected to the first lever (19a) at said second hinging axis (Y), extending towards the second hand grip portion (16) and having an active end (20) associable with said second hand grip portion (16) in contact relationship therewith; the first lever (19a) lying transversely of the first body (15) when the lever system (19) is in the first position; the first lever (19a) abutting against the first body (15) when the lever system (19) is in the second position.

8. A handle as claimed in claim 7, **characterized in that** the second hand grip portion (16) has an engagement groove (21) for insertion of the active end (20) of the second lever (19b) of the lever system (19).

9. A pot comprising:
- a base (2);
- a side wall (3) extending transversely of the base (2) and provided with a rim (5), which is designed to define a holding volume (4) together with said base (2);
**characterized in that** it comprises at least one handle (6) as claimed in anyone of claims 1 to 8 hooked to the pot rim (5).

## Patentansprüche

1. Abnehmbarer Griff für Töpfe, umfassend:
- ein Hakenglied (7), das eine erste Eingriffsfläche (10) und eine zweite Eingriffsfläche (12) aufweist, die zwischen einer Offenstellung, in der die erste Eingriffsfläche (10) von der zweiten Eingriffsfläche (12) beabstandet ist, und einer Schließ- und Spannstellung beweglich sind, in der die erste Eingriffsfläche (10) in der Nähe der zweiten Eingriffsfläche (12) positioniert ist;
- ein Griffglied (8), das mit dem Hakenglied (7) verbunden ist und von einer Hand ergriffen werden kann; wobei das Griffglied (8) einen ersten Griffabschnitt (14) aufweist, der an der ersten Eingriffsfläche (10) festliegt, um einen ersten Körper (15) zu bilden;
- Klemmmittel (18), die ein Hebelsystem (19) umfassen, das von einer ersten Stellung in Richtung einer zweiten Stellung beweglich ist, um die erste Eingriffsfläche (10) und die zweite Eingriffsfläche (12) in Richtung der Schließ- und Spannstellung zu schließen;
**dadurch gekennzeichnet, dass** das Griffglied (8) einen zweiten Griffabschnitt (16) aufweist, der an der zweiten Eingriffsfläche (12) festliegt, um einen zweiten Körper (17) zu bilden, wobei der erste Körper (15) den zweiten Körper (17) überlappt; und dadurch, dass das Hebelsystem (19) zwischen dem ersten und dem zweiten Griffabschnitt (14, 16) wirkt, um den ersten Griffabschnitt (14) vom zweiten Griffabschnitt (16) zu beabstanden, sobald die erste Eingriffsfläche (10) und die zweite Eingriffsfläche (12) in Richtung der Schließ- und Spannstellung geschlossen sind.

2. Griff nach Anspruch 1, **dadurch gekennzeichnet, dass** das Hakenglied (7) eine erste, die erste Eingriffsfläche (10) tragende Backe (9) und eine zweite, die zweite Eingriffsfläche (12) tragende Backe (11) umfasst; wobei die erste und die zweite Backe (9, 11) miteinander um eine erste Anlenkachse (X)herum schwenkbar verbunden sind, um zwischen der Schließstellung und der Offenstellung geschwenkt zu werden.

3. Griff nach Anspruch 2, **dadurch gekennzeichnet, dass** er überdies einen Ansatz (23) umfasst, der sich von der zweiten Backe (11) von der gegenüber der zweiten Eingriffsfläche (12) abgewandten Seite weg erstreckt; wobei der Ansatz (23) eine Auflagefläche (24) aufweist, die im wesentlichen zur zweiten Eingriffsfläche (12) senkrecht steht und sich vom Vorderrand (11a) der zweiten Backe (11) abwickelt.

4. Griff nach Anspruch 2, **dadurch gekennzeichnet, dass** der zweite Griffabschnitt (14) an der ersten Backe (9) festliegt und sich von der ersten Eingriffsfläche (10) gegenüber der ersten Anlenkachse (X) abgewandt erstreckt; und dadurch, dass der zweite Griffabschnitt (16) an der zweiten Backe (11) festliegt und sich zur zweiten Eingriffsfläche (12) gegenüber der ersten Anlenkachse (X) abgewandt erstreckt.

5. Griff nach Anspruch 4, **dadurch gekennzeichnet, dass** das genannte Hebelsystem (19) am ersten Griffabschnitt (14) um eine zweite Anlenkachse (Y) angelenkt ist.

6. Griff nach Anspruch 5, **dadurch gekennzeichnet, dass** die zweite Anlenkachse (Y) zur ersten Anlenkachse (X) parallel ist.

7. Griff nach Anspruch 6, **dadurch gekennzeichnet, dass** das Hebelsystem (19) aufweist:
- einen ersten Hebel (19a), der sich im wesentlichen oberhalb des ersten Griffabschnittes (14) abwickelt;
- einen zweiten Hebel (19b), der fest und quer vom ersten Hebel (19a) im Bereich der ersten Anlenkachse (Y) verbunden ist, sich in Richtung des zweiten Griffabschnittes (16) erstreckt und ein wirksames Ende (20) aufweist, das unter Berührung mit dem zweiten Griffabschnitt (16) zuordenbar ist; wobei der erste Hebel (19a) zum ersten Körper (15)querliegt, sobald das Hebelsystem (19) sich in der ersten Stellung befindet; wobei der erste Hebel (19a) gegen den ersten Körper (15) anschlägt, sobald das Hebelsystem (19) sich in der zweiten Stellung befindet.

8. Griff nach Anspruch 7, **dadurch gekennzeichnet, dass** der zweite Griffabschnitt (16) eine Eingriffsnut (21) zum Einbringen des aktiven Endes (20) des zweiten Hebels (19b) des Hebelsystems (19) umfasst.

9. Topf, umfassend:
- eine Basis (2);
- eine Seitenwand (3), die sich quer zur Basis (2) erstreckt und einen Rand (5) aufweist, der dazu bestimmt ist, mit der Basis (2) ein Aufnahmevolumen (4) festzulegen;
**dadurch gekennzeichnet, dass** er mindestens einen Griff (6) gemäß einem beliebigen der Ansprüche von 1 bis 8 eingehakt am Rand (5) des Topfes umfasst.

## Revendications

1. Poignée amovible pour casseroles, comprenant:
- un élément d'accrochage (7) présentant une première surface d'engagement (10) et une deuxième surface d'engagement (12) qui sont mobiles entre une position d'ouverture, à laquelle la première surface d'engagement (10) est écartée de la deuxième surface d'engagement (12) et une position de fermeture et serrage à laquelle la première surface d'engagement (10) est positionnée à proximité de la deuxième surface d'engagement (12);
- un élément de prise (8) relié à l'élément d'accrochage (7) et apte à être saisi par la main; ledit élément de prise (8) présentant une première portion de prise (14) solidaire de la première surface d'engagement (10), à constituer un premier corps (15);
- des moyens de blocage (18) comprenant un système de leviers (19) mobile d'une première position vers une deuxième position pour amener la première surface d'engagement (10) et la deuxième surface d'engagement (12) vers la position de fermeture et de serrage;
**caractérisée en ce que** l'élément de prise (8) présente une deuxième portion de prise (16) solidaire de la deuxième surface d'engagement (12), à constituer un deuxième corps (17), le premier corps (15) étant superposé au deuxième corps (17); et **en ce que** le système de leviers (19) est actif de manière opérante entre la première et la deuxième portions de prise (14, 16) pour écarter la première portion de prise (14) de la deuxième portion de prise (16) quand la première surface d'engagement (10) et la deuxième surface d'engagement (12) sont fermées vers la position de fermeture et de serrage.

2. Poignée selon la revendication 1, **caractérisée en ce que** l'élément d'accrochage (7) comporte une première mâchoire (9) portant la première surface d'engagement (10) et une deuxième mâchoire (11) portant la deuxième surface d'engagement (12); lesdites première et deuxième mâchoires (9, 11) étant liées rotativement l'une à l'autre autour d'un premier axe de charnière (X), pour la rotation entre la position de fermeture et la position d'ouverture.

3. Poignée selon la revendication 2, **caractérisée en ce qu'**elle comporte en outre un appendice (23) s'étendant dans une direction s'éloignant de la deuxième mâchoire (11) sur le côté opposé par rapport à la deuxième surface d'engagement (12); ledit appendice (23) ayant une surface d'appui (24) qui est essentiellement orthogonale à la deuxième surface d'engagement (12) et qui s'étend à partir d'un bord avant (11a) de ladite deuxième mâchoire (11).

4. Poignée selon la revendication 2, **caractérisée en ce que** la première portion de prise (14) est solidaire de la première mâchoire (9) et s'étend en position opposée à la première surface d'engagement (10) par rapport au premier axe de charnière (X); et **en ce que** la deuxième portion de prise (16) est solidaire de la deuxième mâchoire (11) et s'étend en position opposée à la deuxième surface d'engagement (12) par rapport au premier axe de charnière (X).

5. Poignée selon la revendication 4, **caractérisée en ce que** ledit système de leviers (19) est articulé sur la première portion de prise (14) autour d'un deuxième axe de charnière (Y).

6. Poignée selon la revendication 5, **caractérisée en ce que** le deuxième axe de charnière (Y) est parallèle au premier axe de charnière (X).

7. Poignée selon la revendication 6, **caractérisée en ce que** le système de leviers (19) présente:
- un premier levier (19a) s'étendant essentiellement au-dessus de la première portion de prise (14);
- un deuxième levier (19b) relié rigidement et en sens transversal au premier levier (19a) en correspondance avec ledit deuxième axe de charnière (Y), s'étendant vers la deuxième portion de prise (16) et ayant une extrémité active (20) susceptible d'être associée à ladite deuxième portion de prise (16) en relation de contact avec cette dernière; le premier levier (19a) étant disposé transversal au premier corps (15) quand le système de leviers (19) est à la première position; le premier levier (19a) venant buter contre le premier corps (15) quand le système de leviers (19) est à la deuxième position.

8. Poignée selon la revendication 7, **caractérisée en ce que** la deuxième portion de prise (16) a une rainure d'engagement (21) pour l'introduction de l'extrémité active (20) du deuxième levier (19b) du système de leviers (19).

9. Casserole comprenant:
- une base (2);
- une paroi latérale (3) s'étendant transversale à la base (2) et munie d'un rebord (5), ladite paroi étant destinée à définir ensemble avec ladite base (2) le volume intérieur de ladite casserole;
**caractérisée en ce qu'**elle comporte au moins une poignée (6) selon l'une quelconque des revendications 1 à 8 laquelle est accrochée au rebord (5) de la casserole.
